# FASCICULE DE BREVET EUROPEEN

(11) **EP 2 861 540 B1**
(45) Date de publication et mention de la délivrance du brevet: **20.03.2019**
(21) Numéro de dépôt: 13727220.9
(22) Date de dépôt: 07.06.2013
(51) Int. Cl.: C03C 15/00

(54) **MÉTHODE DE FABRICATION D'UNE FEUILLE DE VERRE DÉPOLIE SÉLECTIVEMENT**
VERFAHREN ZUR HERSTELLUNG EINER FOLIE AUS SELEKTIV GEÄTZTEM GLAS
METHOD FOR PRODUCING A SHEET OF SELECTIVELY ETCHED GLASS

(30) Priorité: 19.06.2012 BE 201200416
(43) Date de publication de la demande: 22.04.2015
(73) Titulaire: AGC Glass Europe, 1348 Louvain-La-Neuve (BE)
(72) Inventeur: SINAPI, Fabrice, B-5190 Spy (BE); DENEIL, Christine, B-5350 Ohey (BE)
(74) Mandataire: Bayot, Daisy
(86) Numéro de dépôt international: PCT/EP2013/061824
(87) Numéro de publication internationale: WO 2013/189762

(56) Documents cités:
- EP-A1- 0 937 691
- EP-A1- 2 075 238
- WO-A1-2004/026977
- WO-A1-2006/087320
- US-A- 4 451 329
- US-A1- 2007 269 737
- US-A1- 2008 269 049
- US-A1- 2011 267 697
- US-A1- 2012 021 193

## Description

### 1. Domaine de l'invention

La présente invention concerne une méthode de fabrication d'une feuille de verre dont une partie d'une des faces est dépolie. En particulier, la présente invention concerne une méthode de fabrication d'une feuille de verre dont une partie d'une des faces est dépolie chimiquement. En d'autres mots, l'invention concerne une méthode de dépolissage chimique sélectif d'une feuille de verre.

La méthode de l'invention présente notamment des applications dans le domaine de la décoration car les feuilles de verre dépolies partiellement qu'il permet de fabriquer présentent des zones translucides diffusant la lumière qui peuvent représenter des motifs décoratifs. D'autres domaines d'applications tels que la gestion de la lumière, la protection de l'intimité ou la connectique peuvent être également envisagées.

### 2. Solutions de l'art antérieur

Les méthodes de dépolissage chimique sélectif, permettant d'obtenir un motif particulier sur la surface d'un article en verre, sont nombreuses. Ces méthodes peuvent être classées en deux grandes catégories :
(i) les méthodes utilisant un traitement de dépolissage sélectivement appliqué sur le verre ; et
(ii) les méthodes utilisant un masque protecteur, résistant au traitement de dépolissage chimique, permettant de n'exposer au traitement de dépolissage que certaines parties de la surface du verre et éliminé ensuite. Le motif ainsi dessiné sur le verre correspond au négatif du masque appliqué au préalable.

Parmi les méthodes n'utilisant pas de masque mais appliquant sélectivement uniquement aux endroits à dépolir la substance dépolissante, une méthode existante propose d'appliquer sur la feuille de verre de l'acide fluorhydrique (dépolissage chimique) sous forme de pâte visqueuse à l'aide d'une brosse (« brush procédure »). Cette procédure nécessite néanmoins une étape manuelle d'application à la brosse. Le résultat d'un point de vue motif est donc tributaire des qualités artistiques de l'opérateur. Cette méthode est évidemment très difficilement utilisable pour des feuilles de grandes surfaces et elle ne permet pas d'obtenir des motifs avec des contours de grande netteté. Une autre méthode, décrite dans le brevet US 2,127,781, propose de déposer la substance dépolissante par sérigraphie (« screen-printing »), au cours de laquelle on utilise un écran composé d'un tissu synthétique sous forme de mailles tendu sur un cadre métallique. Cette méthode nécessite cependant un écran différent pour chaque motif, et est donc de faible degré de liberté quant aux motifs à appliquer. Elle est de plus également difficilement applicable en ligne et encore plus aux grandes surfaces et ne permet pas la création de motifs fins.

En ce qui concerne les méthodes utilisant un masque protecteur, une pratique conventionnelle et basique est simplement d'utiliser un masque protecteur constitué de ruban adhésif résistant au traitement de dépolissage, appliqué manuellement pour chaque article en verre sur les zones qui ne doivent pas subir le dépolissage. Cette technique présente plusieurs inconvénients. En plus d'être longue et fastidieuse à mettre en oeuvre, elle n'offre qu'une faible reproductibilité d'un même motif sur différents articles en verre et elle génère des motifs dont les contours manquent de netteté. Elle ne permet évidemment pas non plus l'obtention, sur la surface de l'article en verre, de très petits motifs avec une bonne netteté.

D'autres méthodes de dépolissage sélectif exploitent l'application de cire fondue sur les parties à protéger de la surface de l'article en verre, en particulier par sérigraphie, par un applicateur à chaud ou par la technologie du jet d'encre. La netteté des contours des motifs obtenus en utilisant un tel masque, quelle que soit sa technique de dépôt, reste relativement mauvaise du fait du dépolissage du verre sous les bords du masque de cire. Ce « sous-dépolissage » entraîne de plus une augmentation non-contrôlée de la surface du motif texturé en comparaison avec le négatif du masque appliqué sur le verre. Ce phénomène de « sous-dépolissage » pose des problèmes, en particulier lorsqu'on veut obtenir des motifs dépolis très fins. De plus, le dépôt d'une cire par la technique du jet d'encre nécessite de chauffer les têtes d'impression afin de fondre la cire qui se refroidit et durci au contact du verre plus froid, ceci entraîne de nombreux problèmes au niveau de la longévité des têtes d'impression (déformation, dilatation, etc.) mais aussi au niveau de l'homogénéité de l'impression dans le cas de grandes surfaces, car la cire se refroidit de façon inhomogène, plus ou moins rapidement, en fonction de la zone de la surface de la feuille de verre.

Une autre méthode de dépolissage sélectif, décrite dans le brevet US4,451,329 propose de déposer un masque fait d'une résine réticulable déposée par sérigraphie, ou à l'aide d'une brosse (« brushing »), ou par une technique de transfert. Le masque, une fois appliqué, est ensuite réticulé afin d'être rendu résistant au traitement de dépolissage chimique. Ces méthodes de dépôt du masque ont néanmoins beaucoup d'inconvénients, dont certains déjà exposés plus haut. En particulier, la technique de transfert nécessite des étapes supplémentaires que sont notamment le dépôt du matériau protecteur sur la feuille de transfert et son transfert vers la feuille de verre). La netteté des contours des motifs obtenus en utilisant un tel masque et en utilisant les techniques de dépôt du brevet US4,451,329 n'est pas très bonne du fait également du dépolissage du verre sous les bords du masque appliqué.

### 3. Objectifs de l'invention

L'invention a notamment pour objectif de pallier ces inconvénients de l'art antérieur.

L'invention, dans au moins un de ses modes de réalisation, a ainsi pour objectif de fournir une méthode de dépolissage chimique sélectif d'une feuille de verre permettant d'obtenir
(i) une identité entre le négatif du masque et les motifs texturés finalement obtenus ;
(ii) une grande netteté des contours des motifs ; et
(iii) des motifs de petites tailles avec une très bonne résolution.

En particulier, un objectif de l'invention est d'obtenir une méthode de dépolissage chimique sélectif d'une feuille de verre permettant de militer voire éviter le dépolissage du verre sous les bords du masque.

L'invention, dans au moins un de ses modes de réalisation, a également pour objectif de fournir une méthode de dépolissage chimique sélectif d'une feuille de verre, facile à mettre en oeuvre, rapide et qui permet une bonne reproductibilité des motifs sur la surface d'une feuille de verre.

Un autre objectif de l'invention, dans au moins un de ses modes de réalisation, est de fournir une méthode de dépolissage chimique sélectif d'une feuille de verre offrant un degré de liberté élevé quant aux motifs à créer sur la feuille de verre. Par degré de liberté élevé, on entend la possibilité de créer une grande quantité de motifs différents et un passage rapide d'un motif à un autre.

Finalement, l'invention, dans au moins un de ses modes de réalisation, a également pour objectif de fournir une méthode de dépolissage chimique sélectif d'une feuille de verre qui peut être implémentée en ligne, c'est-à-dire suffisamment rapide que pour être intégrée dans une chaîne de production de feuille de verre totalement dépolie chimiquement, sans retarder significativement le rendement de production de ladite chaîne.

### 4. Exposé de l'invention

L' invention concerne une méthode de fabrication d'une feuille de verre dépolie sélectivement, comprenant les étapes successives suivantes :
a) une étape de masquage comprenant le dépôt sélectif sur une des faces de la feuille d'une composition organique réticulable liquide au moyen d'au moins une tête à jet d'encre et la réticulation de ladite composition par exposition à un rayonnement ultraviolet pratiquement simultanée ou simultanée au dépôt de la composition liquide ;
b) une étape de dépolissage durant laquelle les zones de ladite face non recouvertes par la composition réticulée sont dépolies chimiquement ; et
c) une étape de finissage qui comprend l'enlèvement de ladite composition réticulée.

Ainsi, l'invention repose sur une approche tout à fait nouvelle et inventive car elle permet de solutionner les inconvénients de l'art antérieur précités et de résoudre le problème technique posé. Les inventeurs ont en effet mis en évidence, avec la succession des étapes de la méthode de l'invention et en particulier en combinant l'utilisation d'un masque à base d'une composition réticulée avec le dépôt dudit masque par la technologie du jet d'encre, qu'il était possible de limiter, voire éviter totalement, le phénomène de « sous-dépolissage », c'est-à-dire le dépolissage du verre sous les bords du masque. Le masque obtenu de la sorte est de plus aisément enlevé de la feuille de verre à la fin du traitement. La combinaison selon l'invention permet ainsi d'obtenir facilement, rapidement et de façon reproductible une feuille de verre dépolie sélectivement. De plus, cette combinaison permet d'obtenir des motifs dépolis qui peuvent être très petits et dont les contours présentent une grande netteté.

D'autres caractéristiques et avantages de l'invention apparaîtront plus clairement à la lecture de la description suivante d'un mode de réalisation préférentiel, donné à titre de simple exemple illustratif et non limitatif, et des figures annexées, parmi lesquelles :
la figure 1 présente schématiquement (a) les étapes consécutives de la méthode selon l'invention ainsi que (b) le profil en coupe (échelle non respectée) de la surface de la feuille obtenue après chaque étape ;
la figure 2 montre un cliché de microscopie optique d'une feuille de verre dépolie sélectivement selon l'état de la technique, en utilisant un masque de cire ;
la figure 3 montre un cliché de microscopie optique d'une feuille de verre dépolie sélectivement selon l'état de la technique, en utilisant un masque fait d'une composition réticulée et déposé par sérigraphie ;
la figure 4 montre un cliché de microscopie optique (a) d'une feuille de verre recouverte d'un masque déposé selon l'invention et (b) de la même feuille de verre après dépolissage et enlèvement du masque selon l'invention ; et
la figure 5 montre une photographie d'une partie de la surface de la feuille de verre de la figure 4 (b).

Dans l'invention, on entend par dépolissage du verre, l'enlèvement d'une certaine quantité de matière en surface du verre, donnant un aspect translucide/diffusant au verre, une texture spécifique et parfois de la rugosité. On parle de dépolissage chimique quand l'enlèvement de matière se fait par attaque/réaction chimique.

La feuille utilisée dans la méthode selon l'invention est faite de verre pouvant appartenir à diverses catégories. Le verre peut ainsi être un verre de type silico-sodo-calcique, un verre au bore, un verre au plomb, un verre comprenant un ou plusieurs additifs répartis de manière homogène dans sa masse, tels que, par exemple, colorant inorganique, composé oxydant, agent régulateur de la viscosité et/ou agent facilitant la fusion. De préférence, le verre de la feuille de l'invention est de type silico-sodo-calcique. Le verre peut être clair, extra-clair, ou coloré dans la masse. La feuille de verre selon l'invention peut être une feuille de verre totalement lisse ou même une feuille de verre déjà dépolie totalement. Selon un mode de réalisation préféré, la feuille de verre est une feuille de verre flotté. De manière toute préférée, la feuille de verre est une feuille de verre flotté de type silico-sodo-calcique. La feuille de verre peut avoir une épaisseur allant de 0,7 à 20 mm.

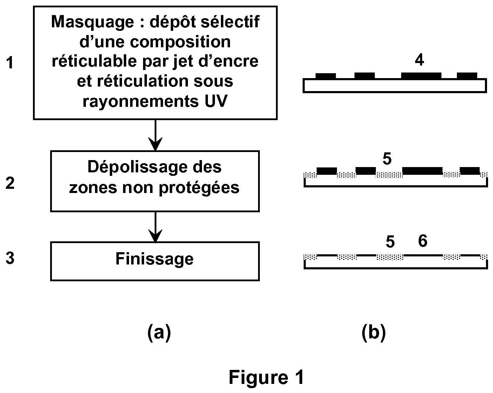

Tel qu'illustré à la figure 1, la méthode de l'invention comprend une étape de masquage (1) qui englobe :
(i) le dépôt sélectif au moyen d'au moins une tête à jet d'encre d'une composition organique réticulable liquide, et
(ii) la réticulation de la composition par exposition à un rayonnement ultraviolet, de manière à former un masque (4) durci qui est résistant à l'étape de dépolissage (2).

Par dépôt sélectif, on entend le dépôt sur une partie seulement d'une des faces de la feuille de verre. Par réticulation, on entend une étape qui permet notamment à une composition organique de durcir. La réticulation selon l'invention implique des réactions chimiques, telles que des polymérisations, qui sont induites par l'exposition au rayonnement ultraviolet. Elle peut également impliquer un séchage (par évaporation du (des) solvant(s) éventuellement présent(s) dans la composition liquide). Le rayonnement ultraviolet selon l'invention peut être un rayonnement d'une seule longueur d'onde ou bien alternativement être un rayonnement comprenant plusieurs longueurs d'onde.

De manière avantageuse, selon l'invention, la réticulation par exposition à un rayonnement ultraviolet est pratiquement simultanée ou simultanée au dépôt de la composition liquide. Selon ce mode de réalisation, les gouttes de la composition liquide sont durcies/réticulées dès leur dépôt sur la feuille de verre, empêchant ainsi leur étalement/écoulement sur ladite feuille et toute déformation du motif du masque qui en résulterait. Ceci est particulièrement avantageux dans la mesure où, avec ce mode de réalisation, des motifs très fins peuvent être obtenus, avec une haute résolution.

Selon l'invention, la composition organique appropriée est choisie notamment en fonction du type de dépolissage chimique choisi et elle doit également être aisément éliminée de la feuille de verre, une fois le traitement de dépolissage terminé. Par composition organique, on entend une composition qui comprend au moins un composé organique. Par composition réticulable, on entend une composition qui réticule lorsqu'elle est exposée à des rayonnements ultraviolets.

De manière préférée, la composition organique liquide, avant réticulation, comprend au moins un agent photo-initiateur et un mélange de monomères et/ou d'oligomères.

Selon un mode de réalisation de l'invention, la composition organique comprend au moins un agent photo-initiateur, au moins un oligomère et au moins un co-monomère capable de polymériser avec l'oligomère. Selon l'invention, l'oligomère peut provenir de l'oligomérisation de monomères identiques ou différents. L'oligomère peut être choisi parmi les oligomères acrylates tels que l'époxy acrylate, l'acrylate d'uréthane ou l'acrylate de polyester et le co-monomère peut être choisi parmi les acrylates mono- ou polyfonctionnels ou d'autres monomères tels que le N-vinyl pyrrolidone ou le N-vinyl caprolactame.

Alternativement, selon un autre mode de réalisation de l'invention, la composition organique comprend au moins un agent photo-initiateur, au moins un monomère et au moins un co-monomère capable de polymériser avec le monomère. Selon ce mode réalisation, le monomère et le co-monomère peuvent être choisis parmi les acrylates mono- ou polyfonctionnels ou d'autres monomères tels que le N-vinyl pyrrolidone ou le N-vinyl caprolactame. Le co-monomère et le monomère peuvent être identiques ou différentes.

Selon un mode de réalisation particulier, la composition organique liquide, avant réticulation, peut additionnellement déjà comprendre des polymères qui sont solubles dans ladite composition liquide, tels que l'acétate de polyvinyle ou le polyacrylate.

Selon un autre mode de réalisation particulier, la composition organique liquide selon l'invention comprend facultativement un ou plusieurs des composants suivants : agent de flux, agent de mouillage, surfactant, solvant, colorant, pigment, liant.

Selon l'invention, la tête à jet d'encre peut comprendre plusieurs buses d'éjection, capables d'éjecter la composition organique liquide sous forme de gouttelettes. A titre d'exemple, la tête à jet d'encre selon l'invention peut comprendre 128 buses. Selon le motif à créer sur la surface de la feuille de verre, chaque buse peut être déclenchée séparément ou toutes les buses peuvent être déclenchées ensemble.

Selon l'invention, la tête à jet d'encre peut fonctionner selon deux technologies : (i) soit le jet en continu, lors duquel les gouttelettes sont continuellement éjectées de la tête, et déviées en partie vers le verre, le reste étant récupéré et recyclé pour un nouveau cycle de jet, (ii) soit le jet à la demande, lors duquel ne sont créées et éjectées que les gouttelettes nécessaires à la formation du masque.

Selon l'invention, les gouttelettes éjectées peuvent avoir un volume allant de 5 picolitres à 100 picolitres. Il est possible d'utiliser des tailles de gouttelettes variables soit en utilisant des buses à volume de gouttelettes variables soit en utilisant des buses avec un volume de gouttes fixes mais différents entre les buses. Ceci permet de contrôler, optimiser la vitesse d'impression, en fonction du motif choisi et/ou de la résolution/netteté de contours désirée. Avantageusement, dans le cas d'un motif de grande taille, les bords du motifs peuvent être obtenus grâce à des gouttelettes de faible volume (par exemple, 6 picolitres) et le centre du motif peut être obtenu avec des gouttes de plus grand volume (par exemple, 80 picolitres).

Pour un point donné de la surface de la feuille de verre qui doit être protégée par le masque, la tête à jet d'encre fournit au moins une fois de la composition organique à la surface de la feuille de verre. Avantageusement, pour un endroit particulier à protéger de la surface du verre, la tête à jet d'encre fournit au moins deux fois de la composition liquide (avec un cycle dépôt-réticulation à chaque fois), afin d'obtenir un meilleur masquage. De manière toute préférée, pour un endroit particulier à protéger de la surface du verre, la tête à jet d'encre fournit deux fois de la composition liquide (avec un cycle dépôt-réticulation à chaque fois), pour obtenir un masquage optimal sans ralentir le processus.

Selon l'invention, plusieurs têtes à jet d'encre peuvent être utilisées pour déposer la composition organique liquide sous forme de gouttelettes. Lorsque plusieurs têtes à jet d'encre sont utilisées, celles-ci peuvent être alimentées avec des compositions liquides réticulables différentes ou identiques. Chaque tête peut avantageusement être contrôlée indépendamment, dans ses mouvements et/ou dans son processus d'éjection des gouttelettes.

Selon l'invention, la vitesse de l'étape (1) de masquage (ou vitesse d'impression du masque), exprimée en surface de la feuille de verre, peut varier entre 5 et 300 m² par heure. Avantageusement, la vitesse de l'étape (1) de masquage, exprimée en surface de la feuille de verre, varie entre 50 et 150 m² par heure, afin d'obtenir un compromis entre résultat optimal pour le dépôt du masque (4) et rapidité de l'étape (1) de masquage.

Selon un mode de réalisation de l'invention, le dépôt de la composition liquide réticulable se fait sur la face supérieure de la feuille de verre positionnée sensiblement horizontalement et immobile et la ou les tête(s) d'impression se déplace(nt) dans les deux directions de l'espace dans un plan parallèle à ladite feuille de verre (impression dite bidirectionnelle). Alternativement, selon un autre mode de réalisation avantageux dans le cas d'un processus en ligne, la feuille de verre, positionnée sensiblement horizontalement, est en mouvement dans une direction de l'espace comprise dans le plan de ladite feuille et, dans ce cas, la ou les tête(s) d'impression se déplace(nt) soit dans une seule direction de l'espace (impression dite unidirectionnelle), perpendiculairement au sens du déplacement de la feuille, soit dans les deux directions de l'espace dans un plan parallèle à ladite feuille de verre.

Selon un autre mode de réalisation de l'invention, la méthode peut comprendre, lors de l'étape (1) de masquage, plusieurs cycles de dépôt-réticulation afin d'obtenir le masque final. De manière préférée, lors de l'étape (1) de masquage, le dépôt et la réticulation simultanés peuvent être combinés avec plusieurs cycles de dépôt-réticulation.

L'étape (2) de dépolissage chimique selon l'invention peut être un dépolissage acide ou un dépolissage basique.

Le dépolissage acide selon l'invention peut être réalisé de façon classique au moyen d'une attaque chimique contrôlée avec une solution aqueuse à base d'acide fluorhydrique. Le dépolissage acide peut être réalisé une ou plusieurs fois. En règle générale, les solutions aqueuses acides utilisées à cet effet ont un pH entre 0 et 5, et elles peuvent comprendre, en plus de l'acide fluorhydrique lui-même, des sels de cet acide, d'autres acides comme HCl, H₂SO₄, HNO₃, acide acétique, acide phosphorique et/ou leurs sels (par exemple, Na₂SO₄, K₂SO₄, (NH₄)₂SO₄, BaSO₄, ...) et également, d'autres adjuvants dans des proportions mineures. Les sels alcalins et d'ammonium sont généralement préférés, comme par exemple le bifluorure de sodium, de potassium et d'ammonium. L'étape de dépolissage acide selon l'invention peut être avantageusement réalisée par attaque acide contrôlée, durant eb temps variable en fonction de la solution d'acide utilisée et du résultat désiré (par exemple pendant plus de 2 minutes).

Le dépolissage basique selon l'invention peut être réalisé de façon classique au moyen d'une attaque contrôlée avec une solution (par exemple, aqueuse ou un mélange alcool-eau) d'un ou plusieurs hydroxydes et/ou carbonates d'alcalin (par exemple, LiOH, NaOH , KOH, K₂CO₃ ou Na₂CO₃) à haute température (par exemple, 300°C ou plus). L'attaque basique peut être réalisée une ou plusieurs fois. En règle générale, les solutions basiques de dépolissage ont un pH supérieur à 9 ou, de préférence, supérieur à 10.

Bien entendu, l'invention couvre également une méthode comprenant au moins deux étapes successives de dépolissage. Ce mode de réalisation peut consister en la répétition d'une même étape de dépolissage (c'est-à-dire avec les mêmes paramètres/conditions opératoires) ou, alternativement, il peut consister en la succession d'étapes de dépolissage avec des paramètres/conditions opératoires différent(e)s.

Tel qu'illustré à la figue 1 (b), l'étape (2) de dépolissage permet donc d'obtenir des zones (5) qui sont dépolies, correspondant aux zones qui n'ont pas été recouvertes préalablement par le masque (4).

La méthode de l'invention comprend finalement une étape (3) de finissage, durant laquelle le masque (4), c'est-à-dire la composition réticulée, est enlevé. Cette étape peut englober également l'élimination de la solution de dépolissage et le rinçage de la feuille de verre. L'élimination du masque (4) peut être réalisée par projection d'un liquide tel qu'une solution aqueuse ou une solution organique. Une solution aqueuse est utilisée préférentiellement et encore plus préférentiellement de l'eau. De façon facultative, la solution aqueuse peut comprendre un détergent et/ou un solvant organique afin d'aider à éliminer le masque (4). Le liquide peut également être à une température supérieure à la température ambiante. De préférence, la projection du liquide sera réalisé au moyen d'au moins un jet sous pression dirigé sur la feuille de verre ou au moyen d'un applicateur « rideau » formant d'un écran de liquide se déversant sur la feuille de verre. L'élimination du masque (4) peut également être réalisée par d'autres procédés industriels connus de nettoyage de surfaces planes.

Tel qu'illustré à la figue 1 (b), l'étape (3) permet donc d'obtenir le produit fini, c'est-à-dire la feuille de verre dépolie sélectivement. La feuille de verre dépolie sélectivement obtenue selon la méthode de l'invention comporte donc
(i) des zones (5) qui sont dépolies, correspondant aux zones qui n'ont pas été recouvertes préalablement par le masque (4), c'est-à-dire correspondant au « négatif » du masque (4), et
(ii) des zones (6) lisses, correspondant aux zones qui ont été recouvertes par le masque (4).

Selon l'invention, le(s) motif(s) que l'on veut obtenir sur la feuille de verre peuvent être créés grâce aux zones dépolies (5) ou alternativement, grâce aux zones lisses (6). Les zones dépolies (5) ou les zones lisses (6) peuvent représenter tout motif. Il peut s'agir d'un logo, de caractères, de textes, d'un dessin, etc. la feuille de verre obtenue selon la méthode de l'invention peut comporter un seul motif ou, alternativement, plusieurs motifs, identiques ou différents, répartis sur la feuille de verre.

Les motifs que la méthode selon l'invention peut créer sur la surface de la feuille de verre ont une taille qui peut descendre jusqu'à environ 500 microns et même jusqu'à 100 microns. Par taille, on entend ici la plus grande dimension du motif.

Un verre dépoli est usuellement caractérisée par sa rugosité et en particulier, par les paramètres Rz et Rsm (exprimés en µm) et le rapport Rz/Rsm entre ces deux paramètres. Selon un mode de réalisation, les zones dépolies (5) de la feuille de verre obtenue selon la méthode de l'invention présentent une rugosité de surface définie par :
- une valeur Rz supérieure à 9 µm et inférieure à 22 µm, et
- un rapport Rz/Rsm supérieur à 0,12 et inférieur à 0,30.

En fonction de la rugosité obtenue, la feuille de verre dépolie sélectivement peut avoir des applications différentes. Par exemple, elle peut être utilisée pour des application décoratives ou, si la rugosité obtenue est importante, pour des applications en tant que sol, plancher, marche d'escalier anti-dérapants.

La méthode selon l'invention, comprenant au moins un cycle de trois étapes successives (1) à (3), peut être réalisée une seule fois. Dans un mode de réalisation particulier de l'invention, le cycle des trois étapes (1) à (3) peut être répété un certain nombre de fois jusqu'à atteindre l'aspect désiré. Dans ce mode de réalisation de l'invention, les cycles comprenant chacun les 3 étapes peuvent utiliser les mêmes conditions opératoires à chaque répétition. Les conditions opératoires peuvent aussi être adaptées d'un cycle à l'autre. Ce mode de réalisation peut ainsi être utilisé, par exemple, afin d'obtenir un dépolissage hétérogène ou, en d'autre mots, afin de générer des intensités de dépolissage différentes d'un motif à l'autre sur la surface d'une même feuille de verre. Dans ce cas, les zones protégées par le masque seront différentes d'un cycle de répétition à l'autre.

La méthode selon l'invention peut également être utilisée pour traiter une feuille de verre déjà dépolie totalement. Selon ce mode de réalisation, les zones sous le masque sont donc déjà dépolies et les zones non protégées peuvent alors être dépolies à nouveau, selon l'étape (2), pour obtenir un dépolissage de plus grande intensité. Toujours selon ce mode de réalisation, alternativement, les zones non protégées peuvent être dépolies, à l'étape (2), selon un traitement qui permet de retrouver une surface de verre plus ou moins lisse, non diffusante. Dans ce cas, les zones dépolies diffusantes correspondent au motif du masque lui-même et non plus au négatif du masque.

Bien entendu, l'invention n'est pas limitée au dépolissage sélectif d'une seule des deux faces d'une feuille de verre. La méthode, réalisée sur une face, peut ainsi être répétée sur la face opposée, avec les mêmes paramètres et/ou conditions ou alternativement avec des paramètres et/ou conditions différentes d'une face à l'autre.

La méthode selon l'invention est particulièrement bien adaptée au dépolissage sélectif de larges surfaces de verre, par exemple, des feuille de verre dont la surface est d'au moins 5 m². Il est entendu que la méthode peut également être utilisé aisément pour le dépolissage sélectif de plus petites surfaces, par exemple des surfaces de l'ordre de 0,5 m².

Selon l'invention, la feuille de verre obtenue par la méthode selon l'invention après l'étape (3) de finissage peut être trempée thermiquement ou chimiquement, ou simplement recuite ou encore durcie.

Pour respecter certaines normes de sécurité, la feuille de verre obtenue par la méthode selon l'invention après l'étape (3) de finissage peut être feuilletée, c'est-à-dire qu'elle est laminée à une autre feuille de verre au moyen d'un film thermoplastique.

Les exemples qui suivent illustrent l'invention, sans intention de limiter de quelque façon sa couverture.

### Exemple 1 (comparatif)

Une feuille de verre clair de 4 mm d'épaisseur et d'une surface de 2,25m x 3,21m a été lavée à l'eau désionisée, puis séchée.

Un masque fait de cire type paraffine (Paramelt, HG grade, point de fusion : 80 - 86 °C) a été déposé sélectivement sur certaines parties de la surface du verre grâce à une tête à jet d'encre comprenant 256 buses et portée à 110°C.

Une solution de dépolissage acide, composée en volume de 50% NH₄HF₂, 25% eau, 6% H₂SO₄ concentré, 6% d'une solution aqueuse de HF 50% en poids, 10% K₂SO₄, 3% (NH₄)₂SO₄, à 20 - 25 °C, a ensuite été déposée sur la totalité de la surface du verre protégée sélectivement et le contact entre le verre et la solution acide a été maintenu pendant 5 minutes. La solution a ensuite été rincée avec de l'eau et le masque de cire a été ensuite éliminé avec un jet d'eau chaude. Finalement, un nettoyage de la surface avec un détergent aqueux a été réalisé.

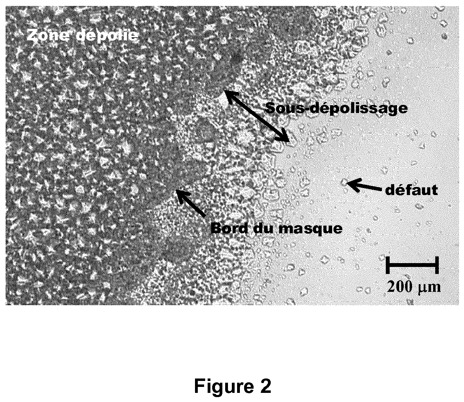

La figure 2 présente un cliché obtenu en microscopie optique de la surface de la feuille de verre traitée selon cet exemple et montre un bord d'un des motifs dépolis obtenus. Ce cliché illustre bien le phénomène de sous-dépolissage, c'est-à-dire le dépolissage sous les bords du masque de cire. Ce sous-dépolissage produit bien entendu une texturation du verre qui est moins intense mais cette texturation est toutefois bien visible à l'oeil nu et entraîne une faible netteté des contours et une augmentation de la surface du motif texturé en comparaison avec le négatif du masque appliqué. Ceci est très critique dans le cas de motifs désirés très petits car ce cliché montre un sous-dépolissage d'une épaisseur d'environ 200 microns tout au long du bord du motif. De plus, ce cliché montre également sur une zone plus éloignée, au-delà des 200 microns à partir du bord du masque, un multitude de petits défauts, c'est-à-dire un phénomène de dépolissage très ponctuel sous le masque, sur l'ensemble de sa surface.

### Exemple 2 (comparatif)

Une feuille de verre clair de 4 mm d'épaisseur et d'une surface de 50cm x 50cm a été lavée à l'eau désionisée, puis séchée.

Une composition organique réticulable a été déposée sélectivement sur certaines parties de la surface de la feuille, selon la méthode de sérigraphie à l'aide d'un écran. La composition liquide utilisée est une encre UV de la société COATES Screen Inks Gmbh.

Après le dépôt de la composition liquide sur la feuille de verre, l'écran est enlevé et la composition liquide est réticulée sous UV.

Une solution de dépolissage acide, composée en volume de 50% NH₄HF₂, 25% eau, 6% H₂SO₄ concentré, 6% d'une solution aqueuse de HF 50% en poids, 10% K₂SO₄, 3% (NH₄)₂SO₄, à 20 - 25 °C, a ensuite été déposée sur la totalité de la surface du verre protégée sélectivement et le contact entre le verre et la solution acide a été maintenu pendant 5 minutes. La solution a ensuite été éliminée par rinçage à l'eau puis le masque a finalement été éliminé avec un jet sous pression d'une solution détergente aqueuse.

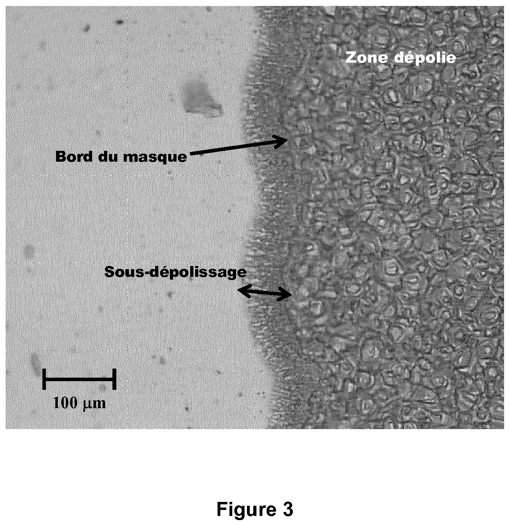

La figure 3 présente un cliché obtenu en microscopie optique de la surface de la feuille de verre traitée selon cet exemple et montre un bord d'un des motifs dépolis obtenus. Ce cliché montre également un phénomène de sous-dépolissage qui entraîne une faible netteté des contours et une augmentation de la surface du motif texturé en comparaison avec le négatif du masque appliqué. Ce dépolissage sous les bords du masque est moins important que dans le cas de l'exemple 1 mais reste un inconvénient majeur, pour les petits motifs en particulier, dans la mesure où il est d'une épaisseur d'environ 70-80 microns tout au long du bord du motif.

### Exemple 3 (conforme à l'invention)

Une feuille de verre clair de 4 mm d'épaisseur et d'une surface 2,25m x 3,21m a été lavée à l'eau désionisée, puis séchée.

Une composition organique réticulable a été déposée sélectivement sur certaines parties de la surface de la feuille, en représentant différents motifs de tailles variables (lignes, grilles, etc). La composition organique utilisée comprend du N-vinylcaprolactame, un monomère acrylate, un photoiniateur et du glycolétharacrylate.

Le dépôt de la composition organique sous forme liquide a été réalisé par jet d'encre grâce à un assemblage de 48 têtes à jet d'encre (système piézoélectrique de gouttes à la demande) comprenant chacune 128 buses. La réticulation sous UV a été faite simultanément au dépôt.

Une solution de dépolissage acide, composée en volume de 50% NH₄HF₂, 25% eau, 6% H₂SO₄ concentré, 6% d'une solution aqueuse de HF 50% en poids, 10% K₂SO₄, 3% (NH₄)₂SO₄, à 20 - 25 °C, a ensuite été déposée sur la totalité de la surface du verre protégée sélectivement et le contact entre le verre et la solution acide a été maintenu pendant 5 minutes. La solution acide a ensuite été éliminée et le masque a finalement été enlevé avec un jet d'eau sous pression à température ambiante.

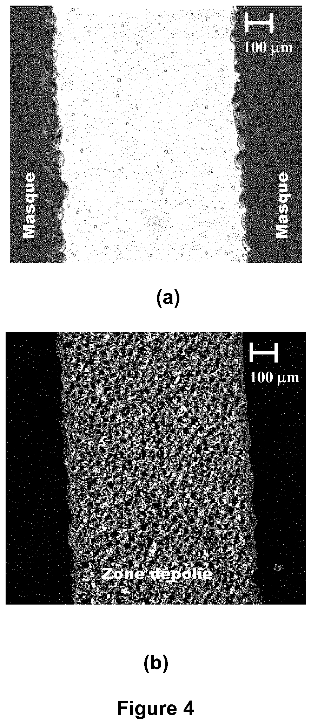

La figure 4 (a) présente un cliché obtenu en microscopie optique de la surface de la feuille de verre traitée selon cet exemple et montre une ligne de composition réticulée d'environ 1mm, montrant ainsi les bords du masque selon l'invention. La figure 4 (b) présente un cliché obtenu en microscopie optique de la même zone que celle observée sur la figure 4 (a) mais après dépolissage et enlèvement du masque, montrant ainsi les bords de la zone dépolie obtenue. Le cliché (b) montre un phénomène de sous-dépolissage pratiquement inexistant, et en tout cas non visible à l'oeil nu (épaisseur de sous-dépolissage ∼10 microns). La comparaison des clichés (a) et (b) permettent d'ailleurs de voir l'identité pratiquement parfaite entre le négatif du masque et le motif dépoli obtenu. De plus, le cliché (b) montre également une zone dépolie avec un contour bien net, presque rectiligne en comparaison avec les bords obtenus aux exemples 1 et 2 (voir Figures 2 et 3) qui sont très peu définis.

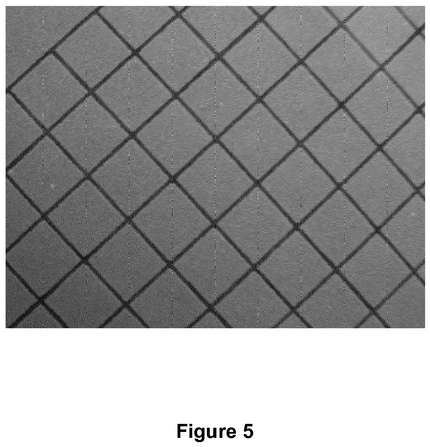

La figure 5 présente une photographie d'une zone de la feuille de verre, après dépolissage et enlèvement du masque, dans laquelle le motif est créé grâce aux zones lisses qui représentent une grille (le masque déposé préalablement au dépolissage représentant la même grille). La largeur des lignes de la grille est de 200 microns.

## Revendications

1. Méthode de fabrication d'une feuille de verre dépolie sélectivement, comprenant les étapes successives suivantes :
a) une étape de masquage (1) comprenant le dépôt sélectif sur une des faces de la feuille d'une composition organique réticulable liquide au moyen d'au moins une tête à jet d'encre et la réticulation de ladite composition par exposition à un rayonnement ultraviolet pratiquement simultanée ou simultanée au dépôt de la composition liquide ;
b) une étape de dépolissage (2) durant laquelle les zones de ladite face non recouvertes par la composition réticulée sont dépolies chimiquement ; et
c) une étape de finissage (3) qui comprend l'enlèvement de ladite composition réticulée.

2. Méthode selon la revendications 1, **caractérisée en ce que** la composition organique liquide comprend au moins un agent photo-initiateur et un mélange de monomères et/ou d'oligomères.

3. Méthode selon la revendication précédente, **caractérisée en ce que** la composition organique liquide comprend au moins un agent photo-initiateur, au moins un oligomère et au moins un co-monomère capable de polymériser avec l'oligomère,

4. Méthode selon la revendication 2, **caractérisée en ce que** la composition organique liquide comprend au moins un agent photo-initiateur, au moins un monomère et au moins un co-monomère capable de polymériser avec le monomère.

5. Méthode selon l'une des revendications précédentes, **caractérisée en ce que**, pour un endroit particulier à protéger de ladite face, la tête à jet d'encre fournit au moins deux fois de la composition organique liquide.

6. Méthode selon la revendication précédente, **caractérisée en ce que**, pour un endroit particulier à protéger de ladite face, la tête à jet d'encre fournit deux fois de la composition organique liquide.

7. Méthode selon l'une des revendications précédentes, **caractérisée en ce que** la vitesse de l'étape de masquage (1), exprimée en surface de la feuille de verre, varie entre 50 et 150 m² par heure.

8. Méthode selon l'une des revendications précédentes, **caractérisée en ce que** l'étape (2) de dépolissage chimique est un dépolissage acide ou un dépolissage basique.

9. Méthode selon la revendication précédente, **caractérisée en ce que** l'étape (2) de dépolissage chimique est un dépolissage acide.

10. Méthode selon l'une des revendications précédentes, **caractérisée en ce que** l'étape de masquage (1) comprend plusieurs cycles de dépôt-réticulation.

11. Méthode selon la revendication 10, **caractérisée en ce que** le dépôt et la réticulation simultanés sont combinés avec plusieurs cycles de dépôt-réticulation.

12. Méthode selon l'une des revendications précédentes, **caractérisée en ce que** la feuille de verre est une feuille de verre flotté de type silico-sodo-calcique.

## Patentansprüche

1. Verfahren zur Herstellung einer selektiv mattierten Glasscheibe, das die folgenden Schritte umfasst:
a) einen Maskierungsschritt (1), umfassend das selektive Abscheiden einer vernetzbaren flüssigen organischen Zusammensetzung mithilfe mindestens eines Tintenstrahlkopfes auf eine der Seiten der Scheibe und Vernetzen der Zusammensetzung durch Exposition gegenüber Ultraviolettstrahlung praktisch gleichzeitig oder gleichzeitig mit dem Abscheiden der flüssigen Zusammensetzung,
b) einen Mattierungsschritt (2), in dem die Zonen der Seite, die nicht von der vernetzten Zusammensetzung bedeckt sind, chemisch mattiert werden, und
c) einen Endbearbeitungsschritt (3), der das Entfernen der vernetzten Zusammensetzung umfasst.

2. Verfahren nach Anspruch 1, **dadurch gekennzeichnet, dass** die flüssige organische Zusammensetzung mindestens einen Photoinitiator und ein Gemisch von Monomeren und/oder Oligomeren umfasst.

3. Verfahren nach dem vorhergehenden Anspruch, **dadurch gekennzeichnet, dass** die flüssige organische Zusammensetzung mindestens einen Photoinitiator, mindestens ein Oligomer und mindestens ein Co-Monomer, das mit dem Oligomer polymerisieren kann, umfasst.

4. Verfahren nach Anspruch 2, **dadurch gekennzeichnet, dass** die flüssige organische Zusammensetzung mindestens einen Photoinitiator, mindestens ein Monomer und mindestens ein Co-Monomer, das mit dem Monomer polymerisieren kann, umfasst.

5. Verfahren nach einem der vorhergehenden Ansprüche, **dadurch gekennzeichnet, dass** für eine bestimmte zu schützende Stelle der Seite der Tintenstrahlkopf mindestens zweimal flüssige organische Zusammensetzung zuführt.

6. Verfahren nach dem vorhergehenden Anspruch, **dadurch gekennzeichnet, dass** für eine bestimmte zu schützende Stelle der Seite der Tintenstrahlkopf zweimal flüssige organische Zusammensetzung zuführt.

7. Verfahren nach einem der vorhergehenden Ansprüche, **dadurch gekennzeichnet, dass** die Geschwindigkeit des Maskierungsschritts (1), ausgedrückt als Oberfläche der Glasscheibe, zwischen 50 und 150 m2 pro Stunde variiert.

8. Verfahren nach einem der vorhergehenden Ansprüche, **dadurch gekennzeichnet, dass** der chemische Mattierungsschritt (2) eine basische Mattierung ist.

9. Verfahren nach dem vorhergehenden Anspruch, **dadurch gekennzeichnet, dass** der chemische Mattierungsschritt (2) eine saure Mattierung ist.

10. Verfahren nach einem der vorhergehenden Ansprüche, **dadurch gekennzeichnet, dass** der Maskierungsschritt (1) mehrere Abscheidungs-/Vernetzungs-Zyklen umfasst.

11. Verfahren nach Ansprüche 10, **dadurch gekennzeichnet, dass** die gleichzeitige Abscheidung und Vernetzung mit mehreren Abscheidungs-/Vernetzungs-Zyklen kombiniert wird.

12. Verfahren nach einem der vorhergehenden Ansprüche, **dadurch gekennzeichnet, dass** die Glasscheibe eine Floatglasscheibe des Kalknatronsilikat-Typs ist.

## Claims

1. Method for the manufacture of a selectively etched glass sheet, comprising the following successive stages:
a) a masking stage (1), which comprises the selective deposition, on one of the faces of the sheet, of a crosslinkable liquid organic composition by means of at least one inkjet head and the crosslinking of said composition by exposure to ultraviolet radiation virtually simultaneously or simultaneous with the deposition of the liquid composition;
b) an etching stage (2), during which the regions of said face not covered by the crosslinked composition are chemically etched; and
c) a finishing stage (3), which comprises the removal of said crosslinked composition.

2. Method according to Claim 1, **characterized in that** the liquid organic composition comprises at least one photoinitiator and a mixture of monomers and/or oligomers.

3. Method according to the preceding claim, **characterized in that** the liquid organic composition comprises at least one photoinitiator, at least one oligomer and at least one comonomer capable of polymerizing with the oligomer.

4. Method according to Claim 2, **characterized in that** the liquid organic composition comprises at least one photoinitiator, at least one monomer and at least one comonomer capable of polymerizing with the monomer.

5. Method according to one of the preceding claims, **characterized in that**, for a specific place to be protected of said face, the inkjet head provides liquid organic composition at least twice.

6. Method according to the preceding claim, **characterized in that**, for a specific place to be protected of said face, the inkjet head provides liquid organic composition twice.

7. Method according to one of the preceding claims, **characterized in that** the rate of the masking stage (1), expressed as surface area of the glass sheet, varies between 50 and 150 m² per hour.

8. Method according to one of the preceding claims, **characterized in that** the chemical etching stage (2) is an acid etching or a basic etching.

9. Method according to the preceding claim, **characterized in that** the chemical etching stage (2) is an acid etching.

10. Method according to one of the preceding claims, **characterized in that** the masking stage (1) comprises several deposition/crosslinking cycles.

11. Method according to Claim 10, **characterized in that** the simultaneous deposition and crosslinking are combined with several deposition/crosslinking cycles.

12. Method according to one of the preceding claims, **characterized in that** the glass sheet is a float glass sheet of soda-lime-silica type.
